# EUROPEAN PATENT APPLICATION

(11) **EP 3 447 612 A1**
(43) Date of publication of application: **27.02.2019**
(21) Application number: 18189478.3
(22) Date of filing: 17.08.2018
(51) Int. Cl.: G06F 3/01, G06F 3/038, A63F 13/285

(54) **METHOD, COMPUTING DEVICE, AND SYSTEM FOR GENERATING A MIXED HAPTIC TRACK FOR A MIXED HAPTIC EFFECT**

(30) Priority: 20.08.2017 US 201762547856 P; 28.07.2018 US 201816048249
(71) Applicant: Immersion Corporation, San Jose CA 95134 (US)
(72) Inventor: Phan, Loc, San Jose, CA 95134 (US); Venkatesan, Srivatsav, San Jose, CA 95134 (US)
(74) Representative: Latscha Schöllhorn Partner AG

(57) **Abstract**

A system comprising a computing device and a haptic-enabled controller is presented. The haptic-enabled controller provides user input. The device determines a controller type of the haptic-enabled controller, and determines that a mixed haptic effect combining first and second haptic effects is to be generated by a haptic actuator of the controller. The device selects a first haptic track associated with the first haptic effect and with a combination of the controller type and the actuator, and selects a second haptic track that is associated with the second haptic effect and with the combination of the controller type and the actuator. The device selects a parameter value of an operation parameter, and generates, based on the parameter value, a mixed haptic track that combines the first and second haptic tracks. The device controls the haptic actuator to generate the mixed haptic effect with the mixed haptic track.

## Description

### FIELD OF THE INVENTION

The present invention is directed to a method, computing device, and system for generating a mixed haptic track for a mixed haptic effect, such as a mixed haptic effect that is generated for a mobile device, user interface device, wearable device, handheld controller, or other consumer electronics.

### BACKGROUND

As electronic user interface systems become more prevalent, the quality of the interfaces through which humans interact with these systems is becoming increasingly important. Haptic feedback, or more generally haptic effects, can improve the quality of the interfaces by providing cues to users, providing alerts of specific events, or providing realistic feedback to create greater sensory immersion within a virtual environment. Examples of haptic effects include kinesthetic haptic effects (such as active and resistive force feedback), vibrotactile haptic effects, and electrostatic friction haptic effects. In some cases, a haptic actuator may play a haptic track to generate a haptic effect.

### SUMMARY

The following detailed description is merely exemplary in nature and is not intended to limit the invention or the application and uses of the invention. Furthermore, there is no intention to be bound by any expressed or implied theory presented in the preceding technical field, background, brief summary or the following detailed description.

One aspect of the embodiments herein relates to a method executed by one or more processors of a computing device for generating a mixed haptic effect, the method comprising: executing an application; determining a controller type of a haptic-enabled controller that is providing user input to the application, wherein any haptic-enabled controller of the controller type (i.e., any haptic-enabled controller belonging to the controller type) has one or more haptic actuators; determining that a mixed haptic effect combining a first haptic effect and a second haptic effect is to be generated by a haptic actuator of the one or more haptic actuators; selecting, from among a first plurality of haptic tracks that are associated with the first haptic effect in a non-transitory computer-readable medium, a first haptic track that is associated with the first haptic effect and associated with a combination of the controller type and the haptic actuator that is to generate the mixed haptic effect; selecting, from among a second plurality of haptic tracks that are associated with the second haptic effect in the non-transitory computer-readable medium, a second haptic track that is associated with the second haptic effect and associated with the combination of the controller type and the haptic actuator; selecting, from among a plurality of parameter values for an operation parameter describing haptic actuator operation, a parameter value that is associated with the combination of the controller type and the haptic actuator; generating, based on the parameter value, a mixed haptic track that combines the first haptic track and the second haptic track; and controlling the haptic actuator to generate the mixed haptic effect by communicating the mixed haptic track to the haptic-enabled controller.

One aspect of embodiments herein relate to a non-transitory computer-readable medium having instructions stored thereon that, when executed by one or more processors, causes the one or more processors to execute an application, and to determine a controller type of a haptic-enabled controller that is providing user input to the application, wherein any haptic-enabled controller of the controller type has one or more haptic actuators. The instructions may further cause the processor to determine that a mixed haptic effect combining a first haptic effect and a second haptic effect is to be generated by a haptic actuator of the one or more haptic actuators, and to select, from among a first plurality of haptic tracks that are associated with the first haptic effect in the non-transitory computer-readable medium, a first haptic track that is associated with the first haptic effect and associated with a combination of the controller type and the haptic actuator that is to generate the mixed haptic effect. The instructions further cause the processor to select, from among a second plurality of haptic tracks that are associated with the second haptic effect in the non-transitory computer-readable medium, a second haptic track that is associated with the second haptic effect and associated with the combination of the controller type and the haptic actuator. The instructions further cause the processor to select, from among a plurality of parameter values for an operation parameter describing haptic actuator operation, a parameter value that is associated with the combination of the controller type and the haptic actuator, and to generate, based on the parameter value, a mixed haptic track that combines the first haptic track and the second haptic track. The instructions further cause the processor to control the haptic actuator to generate the mixed haptic effect by communicating the mixed haptic track to the haptic-enabled controller.

Features, objects, and advantages of embodiments hereof will become apparent to those skilled in the art by reading the following detailed description where references will be made to the appended figures.

### BRIEF DESCRIPTION OF THE DRAWINGS

The foregoing and other features and advantages of the invention will be apparent from the following description of embodiments hereof as illustrated in the accompanying drawings. The accompanying drawings, which are incorporated herein and form a part of the specification, further serve to explain the principles of the invention and to enable a person skilled in the pertinent art to make and use the invention. The drawings are not to scale.
FIGS. 1A illustrates a block diagram of a computing device having a non-transitory computer-readable medium and a processor configured to generate a mixed haptic track, according to an embodiment hereof.
FIG. 1B illustrates a memory that is an embodiment of the non-transitory computer-readable medium, wherein the memory includes a haptic generation component that is configured to generate a mixed haptic track, according to an embodiment hereof.
FIG. 1C illustrates a game console configured to generate a mixed haptic track for a mixed haptic track on at least one haptic actuator of a game controller, according to an embodiment hereof.
FIG. 1D illustrates haptic effect containers for a haptic generation component, according to an embodiment hereof.
FIG. 1E illustrates a game editing computer, according to an embodiment hereof.
FIG. 1F illustrates a common mixer algorithm, according to an embodiment hereof.
FIG. 1G illustrates a mixed haptic track that mixes a first haptic track and a second haptic track, according to an embodiment hereof.
FIG. 2 illustrates a flow diagram that shows a haptic generation component mixing haptic tracks, according to an embodiment hereof.
FIGS. 3A and 3B depict a flow diagram for a method of mixing generating a mixed haptic track, according to an embodiment hereof.
FIG. 4A depicts a block diagram that outlines a process of mixing two haptic tracks, according to an embodiment hereof.
FIGS. 4B-4D illustrate a haptic track being scaled, according to an embodiment hereof.
FIG. 5 depicts a block diagram that outlines a process of mixing two haptic tracks, according to an embodiment hereof.
FIG. 6 illustrates a block diagram of an embodiment in which different mixing algorithms are defined for different endpoints, according to an embodiment hereof.
FIG. 7A illustrates an editor environment in which haptic tracks are designed and a game environment in which haptic tracks are mixed, according to an embodiment hereof.
FIG. 7B illustrates a game environment in which haptic tracks are mixed, according to an embodiment hereof.

### DETAILED DESCRIPTION

The following detailed description is merely exemplary in nature and is not intended to limit the invention or the application and uses of the invention. Furthermore, there is no intention to be bound by any expressed or implied theory presented in the preceding technical field, background, brief summary or the following detailed description.

Embodiments herein relate to mixing (or, more generally, combining) haptic tracks to generate a mixed haptic track, and to a mixing functionality that supports different types of haptic-enabled controllers (e.g., different types of game controllers) and/or different haptic actuators that are included within those types of haptic-enabled controllers. Thus, the mixing functionality of various embodiments herein can take into account what type of haptic-enabled controller and which haptic actuator is a mixed haptic track being generated for. Such a mixing functionality may allow a greater variety of mixed haptic tracks to be generated, so that a mixed haptic track can be tailored to the haptic-enabled controller and haptic actuator for which the mixed haptic track is intended. In some cases, tailoring the mixed haptic track may facilitate the providing of a uniform haptic experience across different haptic-enabled controllers and different haptic actuators. For instance, the same haptic track may cause different haptic actuators to be driven differently, because of differences in, e.g., the mass, stiffness, external environment, resonant frequency (if any), and/or principle of operation among the different haptic actuators. Further, the same haptic track may cause different actuation or yield different user sensations among different types of haptic-enabled controllers because of differences in, e.g., the mass or mass distribution, grip position(s), size, shape, and/or housing configuration among the different types of haptic-enabled controllers, and thus lead to different sensations for the users of those types of haptic-enabled controllers.

In an embodiment, the mixing functionality may rely on a common mixing function (also referred to as a common mixing algorithm) that is common to different types of haptic-enabled controllers and to different haptic actuators. The common mixing function may simplify the implementation of a mixing functionality that supports different types of haptic-enabled controllers and different haptic actuators. However, the common mixing function may be controlled by one or more mixing parameters, wherein the parameter value of some or all of the one or more mixing parameters may be specific to a particular type of haptic-enabled controller and to a particular haptic actuator included within that type of haptic-enabled controller. The use of such a parameter value may allow the common mixing function to be performed in a manner that is specific to the particular type of the haptic-enabled controller in use and to the particular haptic actuator that is to play the mixed haptic track.

In an embodiment, the application may be a game application (also referred to as a game program or game), and the haptic-enabled controller may be a handheld game controller. Example types of a handheld game controller include an Oculus® Touch game controller, an HTC Vive® game controller, a Samsung Gear® VR controller, a Xbox® game controller, a Valve Knuckles® game controller, or an Immersion® TouchSense Force (TSF) Gamepad. In another example, the haptic-enabled controller may be any other type of handheld controller, such as a haptic-enabled computer mouse or a haptic-enabled stylus. In an embodiment, the haptic-enabled controller may be a type of wearable controller, such as a haptic-enabled glove. In an embodiment, the different types of haptic-enabled controllers (also referred to as controller types) may have different respective masses, mass distributions, grip positions, shapes, user input components (e.g., buttons, triggers), placements of haptic actuator(s), numbers of haptic actuators, and/or types of haptic actuators.

In an embodiment, the mixed haptic track may be used to generate a mixed haptic effect. The mixed haptic effect may be a composite effect that is synthesized from multiple haptic effects (e.g., a first haptic effect and a second haptic effect), and may be played or otherwise generated on a single haptic actuator. Thus, the mixed haptic effect may be a synthesis of multiple individual haptic effects for that haptic actuator. In an embodiment, the mixing may be prompted when two haptic effects need to be played concurrently in the form of the mixed haptic effect. Such a situation may occur when a first event that is a triggering condition a first haptic effect overlaps with a second event that is a triggering condition for a second haptic effect. For example, the first event may be an explosion in the game application, while the second event may be a user firing a weapon in the game application. The first event may be associated with the first haptic effect, while the second event may be associated with the second haptic effect. If both events occur concurrently (i.e., overlap in time), the first haptic effect and the second haptic effect associated with the respective events may be mixed (or, more generally, combined) to yield a mixed haptic effect that is to be played on a haptic actuator of the user's Oculus Touch® game controller, HTC Vive® game controller, or other handheld game controller. The mixed haptic effect may be generated with a mixed haptic track, which may be a composite track that is synthesized from a first haptic track that is associated with the first haptic effect, and from a second haptic track that is associated with the second haptic effect. The synthesis may involve a variety of operations, such as multiplication (e.g., dot multiplication) of the haptic tracks, addition of the haptic tracks, some other operation involving the multiple haptic tracks, or any combination thereof.

As stated above, the mixing functionality may support different types of haptic-enabled controllers, also referred to as controller types, such as a first controller type that includes all Oculus Touch® game controllers (and only Oculus Touch® game controllers) and a second controller type that includes all HTC Vive® game controllers (and only HTC Vive® game controllers). In some cases, a particular controller type may have multiple haptic actuators. That is, any haptic-enabled controller belonging to that controller type may have multiple haptic actuators. The multiple haptic actuators may be different types of haptic actuators, or may be the same type of haptic actuator. For instance, the haptic actuators may all be eccentric rotating mass (ERM) actuators. Alternatively, one of the haptic actuators may be an ERM actuator, while another one of the haptic actuators may be a linear resonant actuator (LRA). The haptic actuators may have different external environments. For instance, they may be placed at different locations on or within haptic-enabled controllers of a particular controller type. In some cases, the haptic actuators may have different sizes or masses. In some cases, the haptic actuators may have the same size or same mass. In some cases, the haptic actuators may have different actuator identifiers (e.g., actuator_{left}, actuator_{right}, etc.), such that a mixed haptic track for a mixed haptic effect may be generated in a manner that is based on a particular controller type and actuator identifier associated with the mixed haptic effect. In an embodiment, if a haptic-enabled controller has multiple haptic actuators, each of those haptic actuators may generate its own respective mixed haptic effect. For instance, if there is a both an explosion event and a weapon firing event in a game application, the haptic actuator associated with actuator_{left} may generate a first mixed haptic effect associated with the two events, and the haptic actuator associated with actuator_{right} may generate a second mixed haptic effect that is also associated with the two events. The two mixed haptic effects may involve different mixed haptic tracks. For instance, the first mixed haptic effect may be generated from a first mixed haptic track that mixes a first pair of haptic tracks, and the second mixed haptic effect may be generated form a second mixed haptic track that mixes a second pair of haptic tracks different than the first pair.

In an embodiment, the application may store, or more generally be configured to access, multiple haptic tracks for a particular haptic effect, wherein each of the multiple haptic tracks may be specific to a particular controller type, and may further be specific to a particular haptic actuator included within that controller type (i.e., further be specific to a particular haptic actuator included within any haptic-enabled controller belonging to that controller type). The application may further store, or more generally be configured to access, multiple parameter values of a mixing parameter used to perform the mixing. The mixing parameter may include an operation parameter, a sampling parameter, or any other mixing parameter. As described in more detail below, the operation parameter describes haptic actuator operation, while the sampling parameter indicates a quantity or rate at which haptic track values are mixed. For at least one of the mixing parameters, the multiple parameter values for that parameter may be specific to respective combinations of a controller type and a particular haptic actuator of that controller type. For instance, the multiple parameter values of an operation parameter may be specific to a particular controller type and to a particular haptic actuator within controllers belonging to that controller type.

In an embodiment, when an application is being executed, it may identify the type of haptic-enabled controller (also referred to as controller type) that is currently providing user input to the application. The haptic-enabled controller may have only one haptic actuator, or may have multiple haptic actuators. When a mixed haptic effect is to be generated, the application may determine which haptic actuator(s) of the controller type is to generate the mixed haptic effect. For instance, the application may determine an application identifier (e.g., actuator ID) of a haptic actuator that has been selected to generate the mixed haptic effect. The selection may be based on, e.g., placement of the haptic actuators and/or actuator type. In an embodiment, multiple haptic actuators may be selected to each generate a respective mixed haptic effect, wherein a respective mixed haptic track will be generated for each of the selected haptic actuators. In an embodiment, a selection step is omitted, and all haptic actuators of the haptic-enabled controller may generate a mixed haptic effect, wherein a respective mixed haptic track will be generated for each of the haptic actuators. The application may retrieve haptic tracks that are associated with not only the haptic effects to be mixed, but also associated with the identified controller type and haptic actuator. The application may further retrieve a parameter value of a mixing parameter, wherein the parameter value is specific to the controller type and haptic actuator, and wherein the mixing of the retrieved haptic tracks is performed based on the parameter value. The resulting mixed haptic track that is generated is thus specific to the controller type currently in use and specific to the haptic actuator that is to generate the mixed haptic effect.

In an embodiment, the application may represent, in memory or other non-transitory computer-readable medium, each combination of controller type and haptic actuator as an haptic effect endpoint (also referred to as endpoint), which may be a data structure, software object, variable, or piece of code in the memory. Thus, the application supports a plurality of different endpoints, and more specifically supports mixed haptic effects for a plurality of different endpoints. In an embodiment, an endpoint may include one or more parameter values that describe operation of a haptic actuator for a haptic-enabled controller belonging to a particular controller type. If the controller type involves a controller with multiple haptic actuators, each of those haptic actuators may be represented by a separate endpoint.

As stated above, the mixing parameter may include an operation parameter and a sampling parameter. The operation parameter may describe operation of the haptic actuator, such as what types of input or what range of input values the haptic actuator is designed for. For instance, the operation parameter may describe a data format that the haptic actuator is designed to accept, wherein the data format refers to a format of haptic track values being received by the haptic actuator. In some cases, the operation parameter may describe a minimum haptic track value and a maximum haptic track value that the haptic actuator is designed to receive (or otherwise operate with) as an input. In some cases, the operation parameter may indicate which haptic track value will cause the haptic actuator to generate a rated maximum force or rated maximum actuation, or indicate which haptic track value will cause the haptic actuator to not generate any force or actuation. In an embodiment, the sampling parameter may indicate how many haptic track samples are to be mixed, or a duration of each haptic track sample. In an embodiment, the mixing parameter may further specify a mixing implementation and/or scaling implementation to be used during the mixing of haptic tracks, as discussed below in more detail.

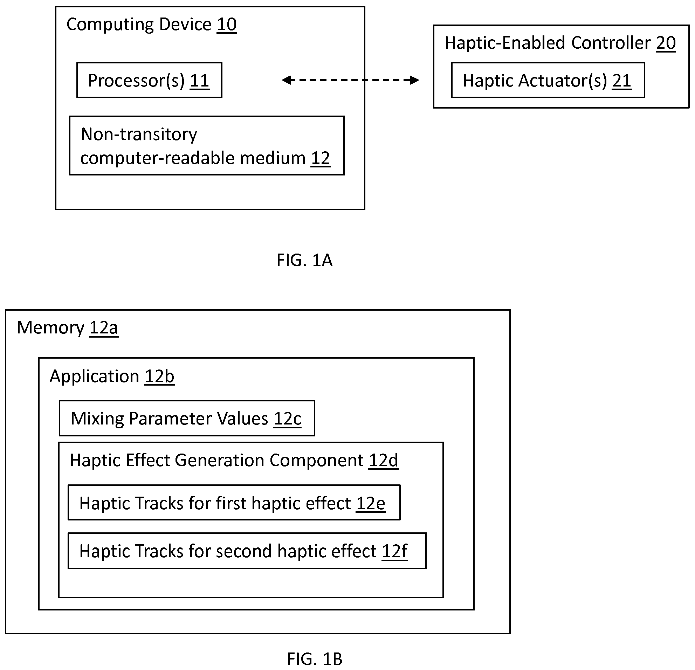

FIG. 1A illustrates a computing device 10 that is configured to provide a mixing functionality for a mixed haptic effect that supports different controller types, or that supports different combinations of controller type and haptic actuator thereof. In an embodiment, the computing device 10 may be a gaming platform, such as a desktop computer, game console, or laptop computer. In an embodiment, the computing device 10 may be a mobile phone, such as a mobile phone that is used to provide a virtual reality (VR) environment with a VR headset, such as a Samsung Gear® or Google Daydream® headset. In an embodiment, the computing device 10 may be a standalone VR headset, such as the Oculus Go® headset or the Lenovo Mirage® headset. In an embodiment, the computing device 10 may include one or more processors 11 that are configured to execute an application, such as a game application and/or VR application. The one or more processors 11 may include one or more microprocessors, a field programmable gate array (FPGA), an application specific integrated circuit (ASIC), or a programmable logic array (PLA). The one or more processors 11 may be configured to execute the application via a set of instructions that are stored on a non-transitory computer-readable medium 12 that is on the computing device 10. The non-transitory computer-readable medium 12 may include computer memory, such as dynamic random access memory (DRAM), a solid state drive (SSD), a hard disk drive (HDD), or any other computer memory.

In an embodiment, the one or more processors 11 may be configured to communicate with a haptic-enabled controller 20, such as a handheld game controller that is used to provide user input to an application being executed by the one or more processors 11. As stated above, examples of the haptic-enabled controller 20 include an Oculus® Touch game controller, an HTC Vive® game controller, a Samsung Gear® VR controller, a Xbox® game controller, an Immersion® TouchSense Force (TSF) Gamepad, a haptic-enabled mouse, and a haptic-enabled stylus. The above examples may constitute different types of haptic-enabled controllers. The haptic-enabled controller 20 may include a sensor that is configured to sense user movement or an input gesture from the user. In some cases, the haptic-enabled controller 20 may include a wireless communication unit that is configured to communicate wirelessly with the computing device 10. In some cases, the haptic-enabled controller 20 may have a wired connection to the computing device 10, and may be configured to communicate with the computing device 10 via the wired connection. The communication may involve, e.g., the haptic-enabled controller 20 communicating user input to the computing device 10, and the computing device 10 providing a command to the haptic-enabled controller 20. The command may include a haptic command that instructs the haptic-enabled controller 20 to generate a haptic effect thereon. In some cases, the haptic command may include a haptic track that is to be played by the haptic-enabled controller 20. In some cases, the command may include an actuator identifier that identifies a haptic actuator of the haptic-enabled controller 20 on which the haptic effect is to be generated.

In an embodiment, the haptic-enabled controller 20 may include one or more haptic actuators 21. The one or more haptic actuators 21 may include an eccentric rotating mass (ERM) actuator, a linear resonant actuator (LRA), a solenoid resonant actuator (SRA), a piezoelectric actuator, or any other haptic actuator. The one or more haptic actuators 21 may be used as a rumble actuator that generates a vibrotactile haptic effect on a body of the haptic-enabled controller 20, or may be used as a kinesthetic actuator that generates a kinesthetic haptic effect. For instance, if the haptic-enabled controller 20 includes a trigger, the one or more haptic actuators 21 may include a motor actuator that is configured to alternate between pushing and pulling on the trigger to create a kinesthetic haptic effect at that component. In an embodiment, the haptic-enabled controller 20 and the computing device 10 are separate devices.

FIG. 1B depicts a memory 12a that is an embodiment of the non-transitory computer-readable medium 12. More specifically, the memory 12a stores instructions and data for an application 12b, such as a gaming application or VR application, that can be executed by the one or more processors 11. The application 12b may include a haptic effect generation component 12d, which may be a component of the application 12b that is used by the application 12b to generate haptic tracks for a haptic effect. The application 12b may then communicate the generated haptic tracks to the haptic-enabled controller 20 (e.g., via the wireless communication unit). In an embodiment, the haptic effect generation component 12d may be a plug-in or binary file that is installed within the application 12b.

In an embodiment, the haptic effect generation component 12d may store haptic tracks for a haptic effect. In FIG. 1B, the haptic tracks include a first plurality 12e of haptic tracks for a first haptic effect, and a second plurality 12f of haptic tracks for a second haptic effect. Each haptic track of the first plurality 12e of haptic tracks and the second plurality 12f of haptic tracks may be specific to a particular controller type, or further specific to a particular combination of a controller type and a haptic actuator that is included within the controller type. The haptic actuator may be one of a plurality of haptic actuators that are included within the controller type, or may alternatively be the only haptic actuator included within the controller type.

In an embodiment, if the application 12b determines that a mixed haptic effect combining the first haptic effect and the second haptic effect is to be generated, the application 12b may make a function call to or otherwise request the haptic effect generation component 12d to generate a mixed haptic track for the mixed haptic effect. As part of the request, the application 12b may indicate that the mixed haptic track is being generated for a combination of a particular controller type (e.g., a type that includes HTC Vive® game controllers) and a particular haptic actuator included within that controller type. The haptic effect generation component 12d may be configured to select a first haptic track from among the first plurality 12e of haptic tracks, and select a second haptic track from among the second plurality 12f of haptic tracks, wherein each of the first haptic track and the second haptic track is associated with the combination of controller type and haptic actuator. The haptic effect generation component 12d may then generate a mixed haptic track from the first haptic track and the second haptic track, and return the mixed haptic track to the application 12b, which may communicate the mixed haptic track to the haptic-enabled controller.

In an embodiment, the application 12b may a set of parameter values 12c for at least one mixing parameter. The at least one mixing parameter may include a sampling parameter or an operation parameter. As discussed in more detail below, examples of an operation parameter include a max force parameter and a passive force parameter. Each parameter value of the set of parameter values 12c may be specific to a particular combination of controller type and haptic actuator. In some cases, the application 12b may be configured to select a parameter value that is specific to the particular combination of the controller type currently providing user input and of the haptic actuator that is to generate the mixed haptic effect, and provide the parameter value to the haptic effect generation component, which generates a mixed haptic track based on the parameter value.

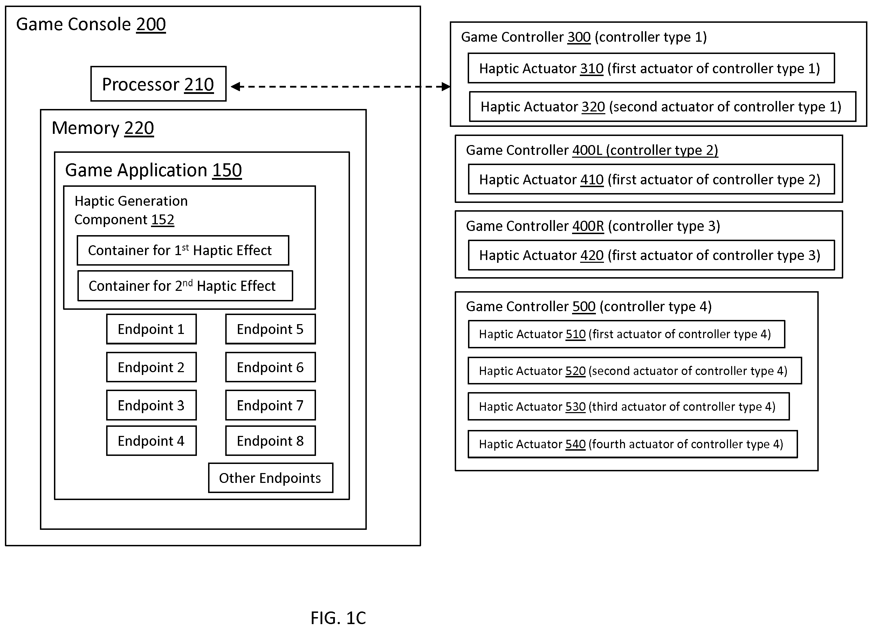

FIG. 1C illustrates a game console 200 that may be an embodiment of the computing device 10. The game console may 200 may include a single processor 210 that is configured to store computer-executable instructions on a memory 220. The memory 220 stores a game application 150, such as a VR game application, which may be stored in memory 220 as a binary or other executable file. The game application 150 may include a haptic generation component 152 (e.g., haptic generation function or library) that is configured to mix haptic effects.

In an embodiment, the game application 150 may be configured to support different controller types. FIG. 1C depicts the game application 150 supporting controller types 1 through 4. More specifically, controller type 1 includes a game controller 300, controller type 2 includes a game controller 400L, controller type 3 includes a game controller 400R, and controller type 4 includes a game controller 500. In one example, the game controller 300 may be an Oculus® Touch controller, the game controller 400L may be a left-handed HTC Vive® game controller, the game controller 400R may be a right-handed HTC Vive® game controller, and the game controller 500 may be an Immersion® TSF gamepad. In this example, the left-handed game controller 400L and the right-handed game controller 400R may be considered to belong to different types of game controllers (i.e., to controller type 2 and controller type 3, respectively).

As depicted in FIG. 1C, controller type 1 may include a first haptic actuator (e.g., haptic actuator 310) and a second haptic actuator (e.g., haptic actuator 320). The first haptic actuator may be, e.g., a kinesthetic actuator having a motor for pulling and pushing on a trigger component that is included in controllers belonging to controller type 1. The second haptic actuator may be, e.g., a rumble actuator such as an ERM actuator used to generate a rumble or other form of vibration. Further in FIG. 1C, controller type 2 may include a first haptic actuator (e.g., haptic actuator 410), which may be the only haptic actuator that is included in a controller belonging to controller type 2. Similarly, controller type 3 may include a first haptic actuator (e.g., haptic actuator 420), which may be the only haptic actuator that is included in a controller belonging to controller type 3. In an example, each of the haptic actuator 410, 420 may be a linear resonant actuator (LRA). Further, controller type 4 may include a first haptic actuator (e.g., haptic actuator 510), a second haptic actuator (e.g., haptic actuator 520), a third haptic actuator (e.g., haptic actuator 530), and a fourth haptic actuator (e.g., haptic actuator 540). In some cases, the first haptic actuator may be a first piezoelectric actuator disposed on a left side of the game controller 500, while the second haptic actuator may be a second piezoelectric actuator disposed on a right side of the game controller 500. The third haptic actuator may be, e.g., a kinesthetic haptic actuator, while the fourth haptic actuator may be an electroactive polymer (EAP) actuator configured to generate a static or low-frequency deformation on a surface of a controller belonging to controller type 4. In an embodiment, the haptic actuators may have different actuator identifiers. For instance, the first through fourth haptic actuators of controller type 4 may have be assigned identifiers 1 through 4, respectively.

In an embodiment, the game application 150 may represent the various game controller types and haptic actuators thereof as respective endpoints. For instance, the game application 150 in FIG. 1C may represent a combination of controller type 1 and the first haptic actuator thereof as endpoint 1. It may further represent a combination of controller type 1 and the second haptic actuator thereof as endpoint 2. The combination of controller type 2 and its haptic actuator may be represented as endpoint 3, while the combination of controller type 3 and its haptic actuator may be represented as endpoint 4. Similarly, endpoints 5-8 may represent the respective combinations of controller type 4 with one of the first through fourth haptic actuator of controller type 4. Thus, the application 150 may provide support for different endpoints. In an embodiment, each endpoint of the endpoints 1-8 may be a data structure that includes information about controller type and the haptic actuator(s) that are associated with the endpoint. For instance, each endpoint may include information that identifies a shape, grip position(s), or mass of a game controller associated with the endpoint, and may include parameter values for one or more operation parameters or other mixing parameter associated with the endpoint.

In an embodiment, the haptic generation component 152 may include multiple haptic effect containers, such as a first container for a first haptic effect and a second container for a second haptic effect. The first haptic effect container may be a data structure that stores multiple haptic tracks associated with a first haptic effect, while the second haptic effect container may be a data structure that stores multiple haptic tracks associated with a second haptic effect.

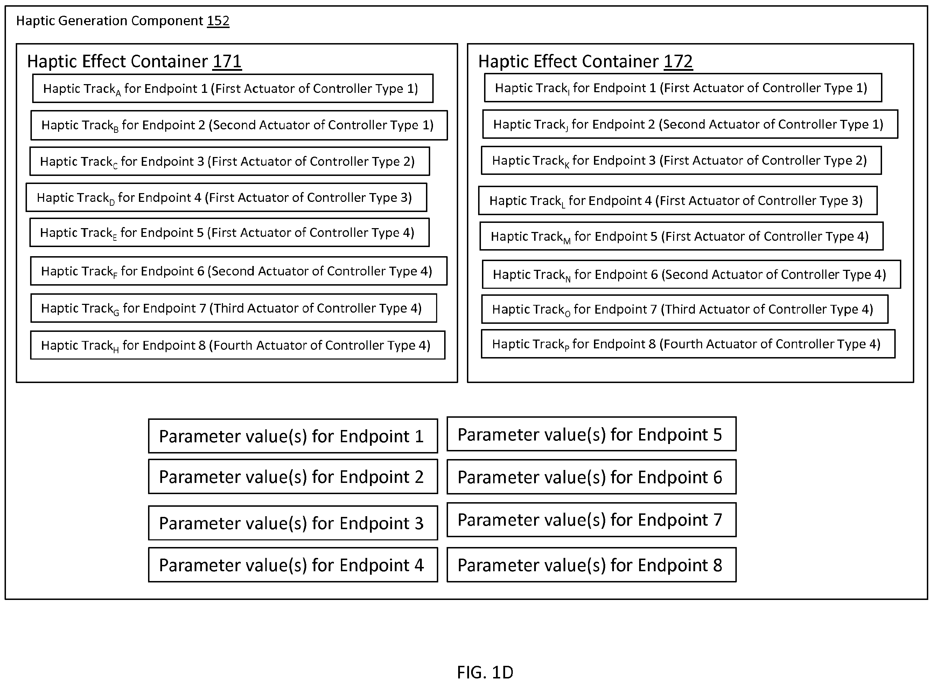

For instance, FIG. 1D illustrates a haptic effect container 171 for a first haptic effect, which may be a haptic effect for, e.g., an earthquake event in the game application 150 of FIG. 1C, or a user firing a weapon in the game application 150. FIG. 1D further illustrates a haptic effect container 172 for a second haptic effect, which may be a haptic effect for, e.g., a user receiving damage in the game application 150. The haptic effect container 171 may store haptic tracks A through H for endpoints 1 through 8, respectively. The haptic effect container 172 may store haptic tracks I through P for endpoints 1 through 8, respectively. The haptic tracks A through P may have been defined by a haptic designer, or may have been previously generated by the haptic effect generation component 152, such as by converting sound files to haptic tracks. When a mixed haptic effect is to be generated at a particular haptic actuator of a particular game controller, the haptic effect generation component 152 may select only the haptic tracks that are associated with an endpoint associated with the controller type of the game controller and associated with the haptic actuator at which the mixed haptic effect is to be generated. For instance, if the haptic effect generation component 152 is mixing a first haptic effect and a second haptic effect for actuator 310 of game controller 300 (which is the first haptic actuator of controller type 1), the haptic generation component 152 may be configured to select only haptic track A from haptic effect container 171, and to select only haptic track I from haptic effect container 172 (both of which corresponds to the first haptic actuator of controller type 1), such that only haptic track A and haptic track I are used to generate a mixed haptic effect for endpoint 1.

In an embodiment, the haptic effect generation component 152 may further include a plurality of parameter values for at least one mixing parameter, such as an operation parameter. For instance, the haptic effect generation component 152 may include eight parameter values for a max force parameter (described below), wherein the eight parameter values correspond to endpoints 1 through 8, respectively. In other words, the plurality of parameter values may correspond with the respective combinations of a controller type and a haptic actuator.

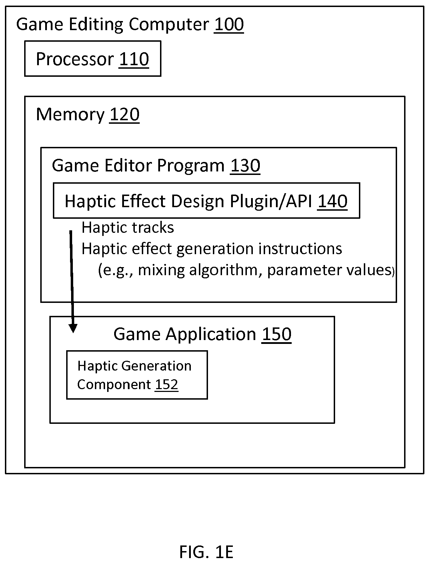

FIG. 1E illustrates a game editing computer 100 that may be used to configure the haptic generation component 152. More specifically, the game editing computer 100 may provide a game editing environment, while the game console 200 of FIG. 1C provides a game execution (or runtime) environment (or, more generally, an application execution environment). In an embodiment, the game editing computer 100 may have a processor 110 and a memory 120. The memory 120 may be any non-transitory computer-readable medium (e.g., a hard drive or solid state memory) that is able to store computer-executable instructions (e.g., code) and any other computer-readable information (e.g., computer data). The memory 120 may store code and data that make up a game editor program 130 (also referred to as game editor application). The game editor program 130 may be used to generate source code and data for a game program 150. In an embodiment, the game editor program 130 may, e.g., be a game engine that provides an editor user interface (UI) that allows a game designer to design animation and other aspects of gameplay. The game editor program 130 may further include code that executes a haptic effect design plugin 140 (e.g., TouchSense Force (TSF) plugin). The haptic effect design plugin 140 may provide an application programming interface (API) that allows the game designer to also design haptic effects.

In an embodiment, the haptic effect design plugin 140 may be configured to generate a user interface that allows the game designer to design a haptic track to be played on a particular haptic actuator of a particular game controller. The haptic track may be represented as a waveform that is a function of time, or more generally as set of track samples having respective track values. The track values may be in a defined range, such as a range of 0 to 1, or a range of -1 to 1. The track values may, e.g., by dimensionless quantities that are eventually converted to a voltage signal or a current signal. In an embodiment, the track values may be used by the game designer or haptic effect designer to denote a desired output of the haptic actuator over time. The desired output may be, e.g., a desired haptic effect intensity, such as a desired amount of force or desired amount of movement being output by the haptic actuator. In some instances, the game designer may define a haptic track by drawing a waveform via the user interface, wherein the waveform represents the set of track values of various track samples of the haptic track. After a haptic track has been defined by a designer, the plugin 140 may store the haptic track as part of the haptic generation component 152 of a game program 150. In an embodiment, the plugin 140 may also store various other instructions and data for generating a haptic effect. Such instructions and data may also be stored as part of the haptic generation component 152 of the game program 150.

In an embodiment, the plugin 140 (e.g., TSF Plugin) may be architected such that it could be released entirely as source code (to be compiled with the game application) or entirely as a binary (and only be compatible with the exact engine build used to compile it). In an embodiment, the TSF plugin may be released as a partial-source distribution such that only pieces that hook into a game engine of the game application are exposed as source code. All pieces that handle haptic effect generation may be decoupled from the game engine, compiled separately, and delivered in binary form. In an embodiment, the TSF plugin may support multiple endpoints beneath the API of the TSF plugin. In an embodiment, the game editor program 130 may cause the game application 150 to be compiled to generate a binary or other executable file. The binary or executable file may be transferred (e.g., over a network, or via a physical storage medium such as a CD) to an end user, who may use install the game application 150 on a computing device (e.g., game console 200) via the binary or executable file.

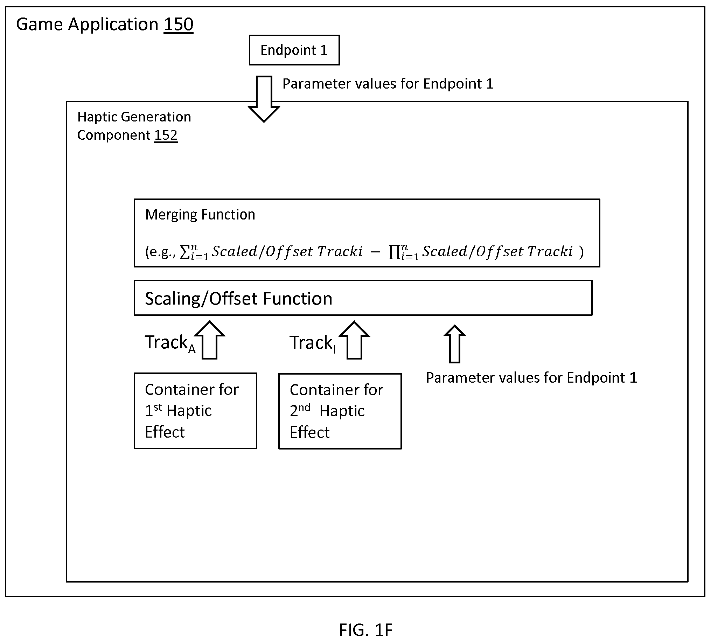

FIG. 1F provides an overview of the mixing performed by the haptic generation component 152. More specifically, FIG. 1F illustrates an example of mixing of a first haptic effect and a second haptic effect for the first haptic actuator of controller type 1 (e.g., for haptic actuator 310 of game controller 300). As stated above, the combination of controller type 1 and the first haptic actuator may be represented by Endpoint 1. The haptic generation component 152 may select haptic tracks associated with Endpoint 1. More specifically, it may select only Haptic Track A from among the plurality of haptic tracks in haptic effect container 171, and may select only Haptic Track I from among the plurality of haptic tracks in haptic effect container 172, and generate a mixed haptic track with Haptic Track A and Haptic Track I. As further depicted in FIG. 1F, the haptic effect generation component 152 may use one or more parameter values associated with Endpoint 1, wherein the one or more parameter values are for one or more mixing parameters, such as one or more operation parameters. The one or more parameter values may be used to control a common mixing algorithm. Further, the one or more parameter values may be stored in the haptic generation component (e.g., as values in a software library), or may be provided to the haptic generation component 152 via the game application 150. As illustrated in FIG. 1F, the common mixing algorithm may in an embodiment include a scaling/offset function and a merging function. The scaling/offset function may be used to scale a haptic track, while the merging function may be used to combine two haptic tracks.

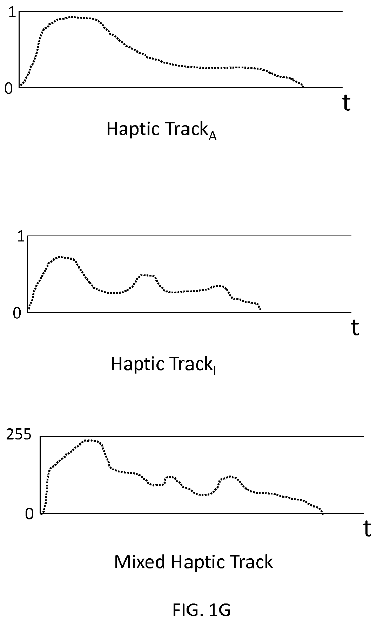

More specifically, in an embodiment, the scaling/offset function may use the one or more parameter values to generate scaled haptic tracks. FIG. 1G illustrates an example of Haptic Track A and Haptic Track I. Each of the haptic tracks may be defined by a plurality of track samples, and each of the plurality of track samples may have a track value that is in a first defined range, such as a range of 0 to 1 (wherein the values are dimensionless values). Haptic Track A and Haptic Track I may have the same length (e.g., the same number of track samples or same duration) or different lengths (e.g., different number of track samples, or different duration). In an embodiment, a haptic actuator that is intended to generate a mixed haptic effect may be designed to receive, as an input, haptic track values that are in a range of 0 to 255 (of dimensionless values), and to convert track values in that range to voltage values in a range of 0 to 5 V. Thus, the track values of Haptic Track A and of Haptic Track I may be scaled to the range of 0 to 255, as described below in more detail. In an embodiment, the scaling/offset function may also introduce an offset to the track values of Haptic Track A or Haptic Track B. The offset may be introduced when the haptic track was designed with a first value (e.g., zero) designating zero force or zero actuation, while the haptic actuator interprets a different value as being zero force or zero actuation.

In an embodiment, the merging function of FIG. 1F may be used to combine two scaled haptic tracks to generate a mixed haptic track. For instance, the merge function may generate a mixed haptic track in which the track value of the ith sample of the mixed haptic track is equal to a sum of the ith samples of the scaled haptic tracks minus a product of the ith samples of the scaled haptic tracks. The merge function may also be some other function, such as an averaging of the scaled haptic tracks. FIG. 1G depicts a mixed haptic track that is generated by mixing a scaled version of Haptic Track A with a scaled version of Haptic Track I. In an embodiment, the mixed haptic track, Haptic Track A, and Haptic Track I all have the same length (e.g., the same number of samples). In an embodiment, the mixed haptic track, Haptic Track A, and Haptic Track I may have different lengths.

One aspect of the embodiments herein relate to using a common mixer algorithm for different endpoints, such as for all of endpoints 1 through 8. That is, different combinations of a controller type and a haptic actuator may rely on the same mixer algorithm, such as the same scaling/offset function and the same merging function. The use a common mixer algorithm may provide a haptic generation component that is more extensible. When a new combination of controller type and haptic actuator needs to be supported, the haptic generation component 152 can use the same mixer algorithm. Thus, the haptic generation component 152 would not need to be re-programmed. However, the haptic effect generation component 152 may still be able to mix haptic effects in a way that is specific to the new combination by using one or more parameter values and using haptic tracks that are specific to the new combination of controller type and haptic actuator. In another embodiment, the haptic generation component 152 may have stored computer-readable instructions for at least two different mixing algorithms. In such an embodiment, the application 150 may be configured to use a Mix Implementation parameter and/or a Scale Implementation parameter, which are also mixing parameters, to specify which mixing algorithm is to be used for generating a mixed haptic track. In an embodiment, a value of the Mix Implementation parameter and/or a value of the Scale Implementation parameter may be used to override a default algorithm being used by the haptic generation component 152. For instance, the Mix Implementation parameter may have a value that selects between, e.g., a first merging function that averages two haptic tracks and a second merging function that multiplies two haptic tracks.

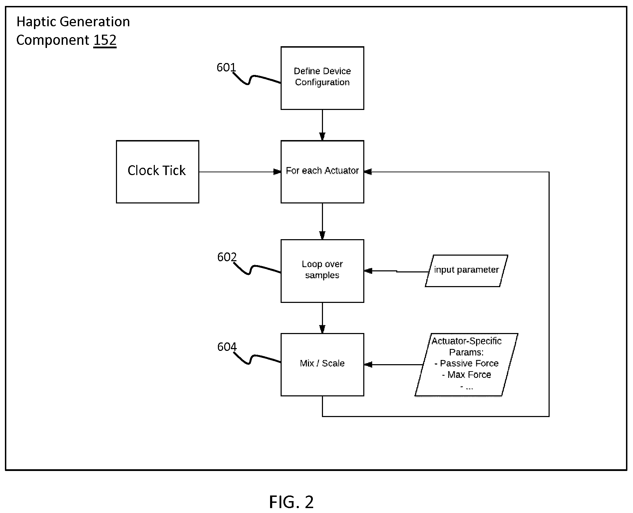

FIG. 2 depicts a flow diagram that the haptic generation component 152 may use to mix haptic tracks. In an embodiment, the flow diagram includes a step 601 in which the haptic generation component 152, or more generally the game application 150, defines a device configuration. In an embodiment, step 601 may involve determining a controller type of a haptic-enabled controller that is currently providing user input to the application 150, and determining which one or more haptic actuators belonging to the controller type are to output a respective mixed haptic effect. For instance, if a user is currently playing the game application 150 with game controller 500, then step 601 may involve determining that a haptic-enabled controller of controller type 4 is being used to provider user input to the game application 150, and may further involve determining that the first haptic actuator (corresponding to haptic actuator 510) and the second haptic actuator (corresponding to haptic actuator 520) included in controller type 4 are to each generate a respective mixed haptic effect concurrently, wherein each of the first and second haptic actuators is to generate a mixed haptic effect that combines a first haptic effect and a second haptic effect.

In an embodiment, the mixing may be performed in a loop that has multiple iterations. The multiple iterations may be driven by a clock, with each iteration being triggered by a clock tick (also referred to as a clock cycle), such as a rising edge or falling edge of a clock signal. The clock ticks may be periodic and have a period of, e.g., 100 msec or some other duration. Thus, in an embodiment, the mixing may be done periodically (e.g., every 100 msec).

As illustrated in FIG. 2, the mixing may in an embodiment apply to each of multiple actuators, such as actuator 510 and actuator 520. For instance, if an first event in the application 150 triggers a first haptic effect, and a second event concurrently triggers a second haptic effect while the game controller 500 is providing user input to the application 150, the haptic actuator 510 may generate a first mixed haptic effect that combines the first haptic effect and the second haptic effect, while the haptic actuator 520 may concurrently generate a second mixed haptic effect that also combines the first haptic effect and the second haptic effect.

In an embodiment, the haptic generation component in step 602 may loop through track samples of the haptic tracks being mixed for a particular haptic actuator. For instance, each iteration of the loop may involve retrieving 20 track samples of Haptic Track A and retrieving 20 track samples of Haptic Track I. In an embodiment, step 602 may be controlled by a sampling parameter, which is a type of mixing parameter. For instance, the sampling parameter may be a Samples Per Update parameter whose value (e.g., 20) specifies how many track samples from each of the haptic tracks is to be retrieved and mixed on every iteration of the loop.

In step 604, the haptic generation component 152 may perform mixing of the haptic track samples, such as mixing the track samples of Haptic Track A with the track samples of Track I. For instance, step 604 may involve scaling the respective track values of the track samples of Haptic Track A, such as by multiplying the track values with a scaling factor, and similarly scaling the respective track values of the track samples of Haptic Track I. In this example, the haptic generation component 152 may then, for instance, take a sum or average of the scaled track values of Haptic Track A with corresponding scaled track values of Haptic Track I. The sum or average may be performed, e.g., on a sample-by-sample basis, like in the example illustrated in FIG. 1F.

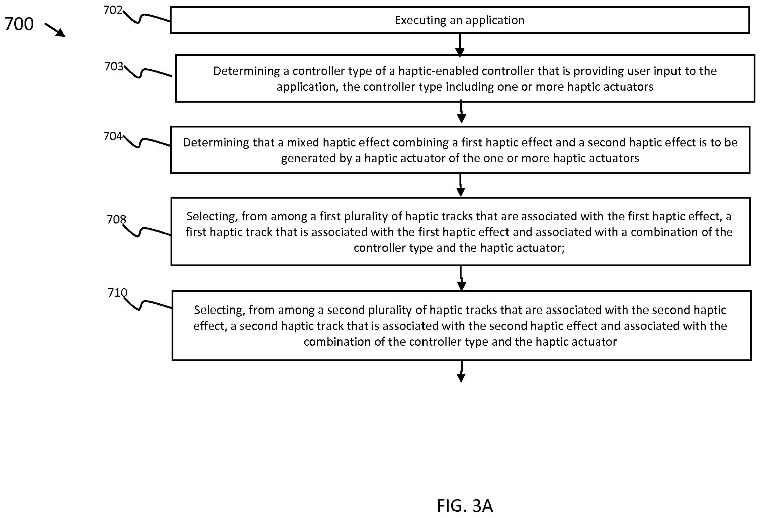

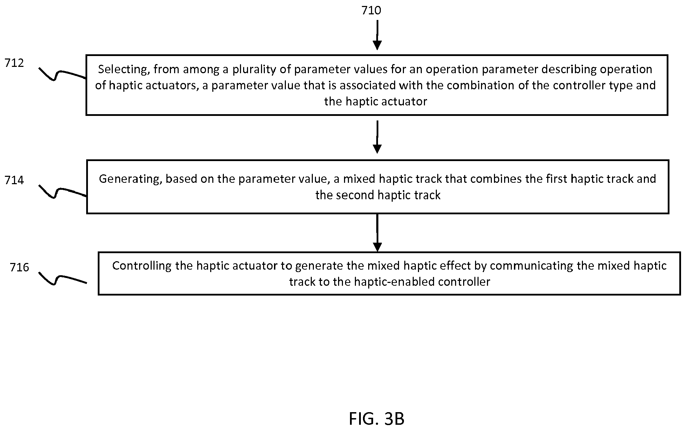

FIGS. 3A and 3B depicts another flow diagram for a method 700 for generating a mixed haptic effect. In an embodiment, the method 700 may be performed by the processor 11 of computing device 10, or more specifically by processor 210 of game console 200. In an embodiment, the method begins at step 702, in which the processor 210 executes an application, such as game application having a VR environment. The game application may be, e.g., a first-person shooter game, a car racing, or any other game application. In some cases, the game application may provide an augmented reality (AR) environment. In some cases, the game application may provide a multi-user or multi-player game environment.

In step 703, the processor 210 identifies or otherwise determines a controller type of a haptic-enabled controller that is providing user input to the application, wherein any haptic-enabled controller belonging to the controller type has one or more haptic actuators. For instance, the processor 210 may determine that game controller 310 is communicatively connected with (e.g., wirelessly paired with or plugged into) the computer 200, such that the game controller 310 (which belongs to controller type 1) in FIG. 1C is providing user input to the application. The processor 210 may then determine that it is receiving user input from a haptic-enabled controller of controller type 1. In some instances, the application may be limited to receive user input from only one type of haptic-enabled controller at a time. In some instances, the application may be able to receive user input from multiple types of haptic-enabled controllers at the same time.

In step 704, the processor 210 determines that a mixed haptic effect combining a first haptic effect and a second haptic effect is to be generated by a haptic actuator of the one or more haptic actuators. For instance, a first event or condition in the application may trigger the first haptic effect while a second event or condition in the application concurrently triggers the second haptic effect. In other words, the first event and the second event, which may be respective triggering events for the first haptic effect and the second haptic effect, may overlap in time. In some cases, the first event and the second event may be simultaneous events, which may be events that completely overlap in time. In one example, in a car racing game application, a first event or condition may be a virtual car being driven over a bumpy road, for which a first haptic effect may be generated to simulate driving over the bumpy road. A second event or condition may be the virtual car bumping against a guard rail, for which a second haptic effect may be generated to simulate the virtual car bumping against the guard rail. If, during execution of the game application, the virtual car is driving over the bumpy road and also bumps against the guard rail, a mixed haptic effect that combines the first haptic effect and the second haptic effect may be played in order to convey the virtual car concurrently driving over bumpy road and bumping against a guard rail. In an embodiment, the mixed haptic effect is generated on the haptic-enabled controller, such as controller 310 or controller 410L.

In some cases, step 704 may involve selecting which haptic actuator is to generate the mixed haptic effect. The selection may be made from among haptic actuators that are included in a haptic actuator belonging to the controller type. For instance, the selection may be made from among the first haptic actuator and the second haptic actuator of controller type 1 (to which controller 310 belongs), and may select only one of the haptic actuators (e.g., the first haptic actuator) to generate the mixed haptic effect. The selection may be based on, e.g., placement and/or actuator type of the haptic actuators. For instance, if the first haptic effect and the second haptic effect are both rumble haptic effects, the selection may select only haptic actuators that are rumble actuators, and may exclude any kinesthetic haptic actuator included in the controller type. In some cases, such a selection may be omitted, and all haptic actuators (e.g., the first haptic actuator and the second haptic actuator) of the controller type may be used to generate a different respective mixed haptic effect.

In step 708, the processor 210 selects, from among a first plurality of haptic tracks that are associated with the first haptic effect, a first haptic track that is associated with the first haptic effect and associated with a combination of the controller type and the haptic actuator that is to generate the mixed haptic effect. For instance, if the mixed haptic effect is being generated at the second haptic actuator of controller type 2, the processor 210 may select only Haptic Track B in FIG. 1D from among Haptic Tracks A through H. In an embodiment, the selected haptic track may be retrieved from memory (e.g., from memory 220). In an embodiment, the first haptic track is defined by a set of samples having respective track values that extend in a first defined range (e.g., a range from 0 to 1). One example of the first haptic track may be a waveform represented by a set of samples having the following respective track values: 0, 0.1, 0.4, 0.5, 0.55, 0.65 ... 0.97, 1, 1, 0.8, 0.3, 0.24, ....

In step 710, the processor 210 selects, from among a second plurality of haptic tracks that are associated with the second haptic effect, a second haptic track that is associated with the second haptic effect and associated with the combination of the controller type and the haptic actuator. For instance, the controller 210 may select only Haptic Track I from among haptic tracks I through P. In some cases, the second haptic track may further be retrieved from memory. Like in step 708, the second haptic track may also be defined by a plurality of track samples that have respective track values. The track values of the second haptic track may also be in the first defined range (the same range as that for the first haptic track), or may be in a second defined range that is different than the first defined range.

In step 712, the processor 210 selects, from among a plurality of parameter values for an operation parameter that describes haptic actuator operation, a parameter value that is associated with the combination of the controller type and the haptic actuator. For instance, the processor may select only a max force parameter value and a passive force parameter value that are both associated with the combination of the controller type and the haptic actuator.

In an embodiment, the operation parameter may be a parameter that describes how a haptic actuator responds to one or more haptic track values. For instance, the operation parameter may be a max force parameter, wherein the parameter value of the max force parameter may be a haptic track value that would cause the haptic actuator to generate a rated maximum intensity, such as at least one of a defined rated maximum force or a defined rated maximum actuation. In some cases, the parameter value of the max force parameter may be a haptic track value that the haptic actuator will directly convert to a defined rated maximum voltage of the haptic actuator. For instance, a particular haptic actuator of controller type 1 may be designed to receive digital input values that are in a range of 0 to 255, and may have a defined rated maximum voltage of 5 V. In this example, the haptic actuator may be configured to convert digital values in the range of 0-255 (which are dimensionless values) to a voltage range of 0 V to 5 V, based on a linear relationship that multiplies the first range by a ratio of 5V/255. Thus, the parameter value of the max force parameter in this instance may be 255, which is a haptic track value that the haptic actuator will convert to the defined rated maximum voltage thereof.

In some cases, the operation parameter may include a passive force parameter, wherein the parameter value of the passive force parameter may be a haptic track value that causes the haptic actuator to generate zero force or zero actuation (i.e., zero force, zero actuation, or both zero force and zero actuation). In other words, if the haptic actuator receives, as an input, a haptic track value that is equal to the parameter value of the passive force parameter, the haptic actuator may output substantially no force or actuation. The passive force parameter is illustrated below in more detail.

In step 714, the processor 210 generates, based on the parameter value, a mixed haptic track that combines the first haptic track and the second haptic track. For instance, if the processor 210 generates a mixed haptic track for endpoint 1 (the first haptic actuator of controller type 1), the generating in step 714 may be based on a max force parameter value associated with the first haptic actuator of controller type 1, and based on a passive force parameter value associated with the first haptic actuator of controller type 1.

In step 716, the processor 210 may control the haptic actuator (e.g., haptic actuator 310) to generate the mixed haptic effect by communicating (e.g., transmitting) the mixed haptic track to the haptic-enabled controller (e.g., game controller 300). In some cases, the communication may include an identifier that indicates which haptic actuator of the game controller is to generate the mixed haptic effect.

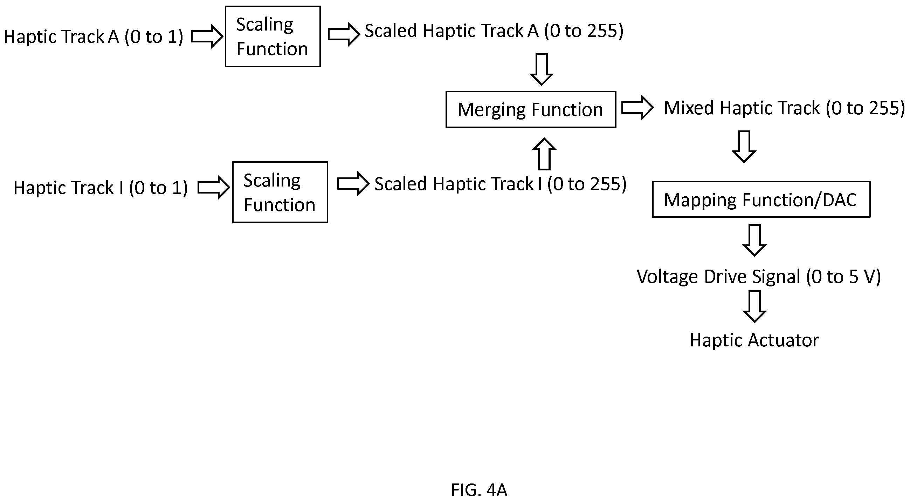

In an embodiment, the generating of the mixed haptic track may involve scaling each of the first haptic track and the second haptic track based on the parameter value of the max force parameter to generate a scaled first haptic track and a scaled second haptic track, and by combining the scaled first haptic track and the scaled second haptic track. For instance, the FIG. 4A provides an overview of a mixing algorithm in which haptic track A is scaled to generate a scaled haptic track A, and haptic track B is scaled to generate a scaled haptic track B. In this example, all the track samples of haptic track A and all the track samples of haptic track B may have a respective track value that is in a range of 0 to 1. The scaling may involve, e.g., multiplying those track values, so that all track samples of scaled haptic track A and all track samples of scaled haptic track B have a respective track value that is in a range of 0 to 255. The mixing process may then combine the scaled haptic track A and the scaled haptic track B via a merging function to generate a mixed haptic track. For instance, the merging function may calculate an average of the track values of the scaled haptic track A and corresponding track values of the scaled haptic track B to generate the mixed haptic track. In an embodiment, all track values of the mixed haptic track may also be in a range of 0 to 255. In an embodiment, the mixed haptic track may be an input that is received by the haptic actuator. The haptic actuator may then use a mapping function and/or a digital to analog converter (DAC) to convert track values to the mixed haptic track to a voltage drive signal. For instance, the mapping function and/or DAC may multiply each of the track values by 5/255 V.

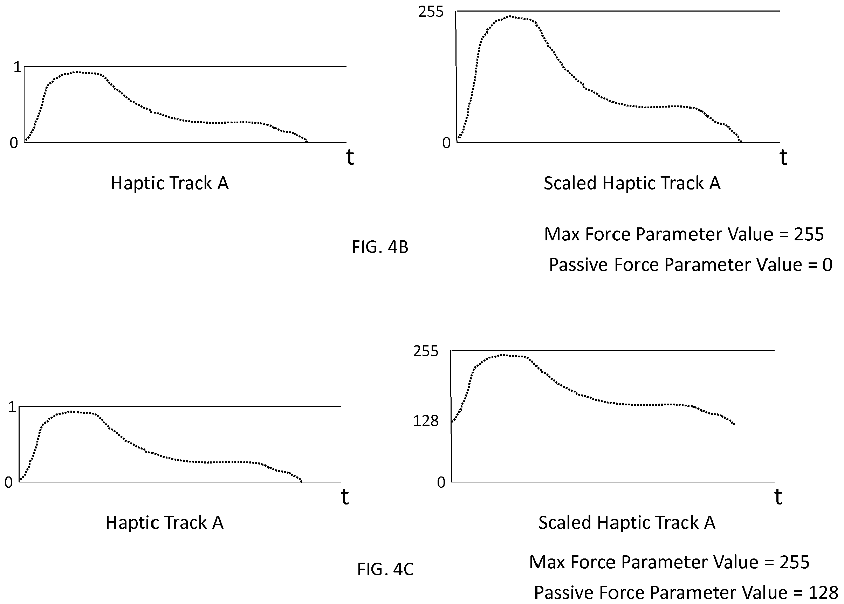

FIG. 4B depicts an example of haptic track A being scaled to generate a scaled haptic track A. In FIG. 4B, the haptic track A may have track values that are all in a first defined range of 0 to 1. The scaling may involve mapping the first defined range to an operational input range of the haptic actuator. In an embodiment, the operational input range may be a range of haptic track values that are valid input values to the haptic actuator. For instance, the haptic actuator may be designed to receive digital input values that are in an operational input range of 0 to 255. Thus, the scaling in FIG. 4B may involve mapping the track values of haptic track A from a first range of 0 to 1 to a second range of 0 to 255.

In an embodiment, a value of an operation parameter may at least partially identify the operational input range. For instance, the max force parameter may have a value that is equal to a maximum value of the operational input range of the haptic actuator. In some cases, the haptic actuator may interpret a haptic track value that is equal to the max force parameter value as corresponding to a defined rated maximum voltage of the haptic actuator. In the embodiment of FIG. 4B, the maximum value of the first defined range (i.e., 1) may be mapped to the value of the max force parameter, such as by multiplying the track values of haptic track A by a ratio equal to the value of the max force parameter divided by the maximum value of the first defined range (i.e., by a ratio equal to 255).

In an embodiment, as illustrated in FIG. 4B, a value of zero in the haptic track A is still zero in the scaled haptic track A. In other words, a zero value in the first defined range may be mapped to a zero value in the operational input range for the haptic actuator (e.g., a rumble actuator). FIG. 4C depicts an embodiment in which a zero value in the haptic track A is mapped to a value other than zero in the scaled haptic track A, such as to a value of 128. More particularly, the zero value in the haptic track A may be mapped to a parameter value of the passive force parameter, which in FIG. 4C is equal to 128. The passive force parameter may identify a haptic track value that will cause the haptic actuator to output zero force or zero actuation. In some cases, the parameter value of the passive force parameter may be substantially half (e.g., rounded to the nearest whole number) of the parameter value of the max force parameter.

In some cases, the parameter value of the passive force parameter may be greater than zero in order to provide an offset from zero, which may be useful for driving a kinesthetic haptic actuator. For instance, the kinesthetic haptic actuator may be a trigger actuator that can be controlled to move in a first direction (e.g., pull a trigger component of a game controller) and in a second direction (e.g., push the trigger component). For such a haptic actuator, haptic track values that are less than the parameter value of the passive force parameter may indicate that the haptic actuator is to move or generate a force in a first direction, and haptic track values that are greater than the parameter value of the passive force parameter may indicate that the haptic actuator is to move or generate a force in a second, opposite direction.

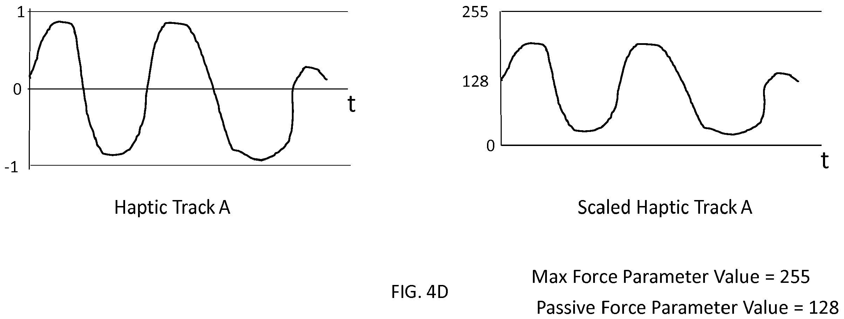

In an embodiment, FIG. 4D illustrates a haptic track A having track values that are configured to drive a kinesthetic haptic actuator to move in a first direction and then in a second, opposite direction. In this example, all of the track samples of haptic track A have a track value that is in a range of -1 to 1. The maximum value of the first range (i.e., 1) may be mapped to the parameter value of the maximum force parameter (e.g., 255). Further, the zero value in the first range may be mapped to the parameter value of the passive force parameter (e.g., 128), and the minimum value of the first range (i.e., -1) may be mapped to the zero value of the operational input range of the haptic actuator. Thus, the track values of the scaled haptic track A that are less than 128 may cause a haptic actuator to output actuation in a first direction, while the track values of the scaled haptic track A that are more than 128 may cause the haptic actuator to output actuation in a second, opposite direction.

In an embodiment, the operation parameters described above may be a subset of mixing parameters that are used to perform the mixing of two haptic tracks. The mixing may use other mixing parameters, such as parameter that indicates how many track samples to mix in one iteration of a loop, a parameter that indicates sample duration or sample frequency, a parameter that indicates mix implementation, and a parameter that indicates scaling implementation. The sample duration may indicate how long each track value is applied to the haptic actuator (e.g., 10 msec). The sample duration may be an inverse of sample frequency (e.g., 100 Hz). In an embodiment, the Mix Implementation may indicate whether the haptic actuator is a bidirectional kinesthetic haptic actuator or a rumble actuator. In an embodiment, the Mix Implementation and Scale Implementation may include code that override a default mixing or scaling algorithm being used to mix two scaled haptic tracks. For instance, they may include code that calculate a formula different from a default formula being used.

In an embodiment, the scaling of the first haptic track and the second haptic track to generate the scaled first haptic track and the scaled second haptic track are performed so that track values in the first defined range are calibrated or otherwise mapped to the operational input range of the haptic actuator. In an embodiment, the mapping illustrated in FIGS. 4B to 4D may be described as multiplying the track value of each track sample of haptic track A by a ratio that is equal to a difference between the parameter value of the max force parameter (e.g., 255) and the parameter value of the passive force parameter (e.g., 128), then divided by a size of the first defined range, which in FIGS. 4B through 4D is equal to the maximum value of the first defined range (i.e., 1). In the above, example, the ratio may be equal to (255-128)/1 = 127. The mapping may further include multiplying the track value of each of the track samples of haptic track A to the ratio (e.g., multiply by 127), and then adding the result to the parameter value of the passive force parameter (e.g., add by 128), or adding the result to the parameter value of the passive force parameter minus 1 (e.g., add by 127).

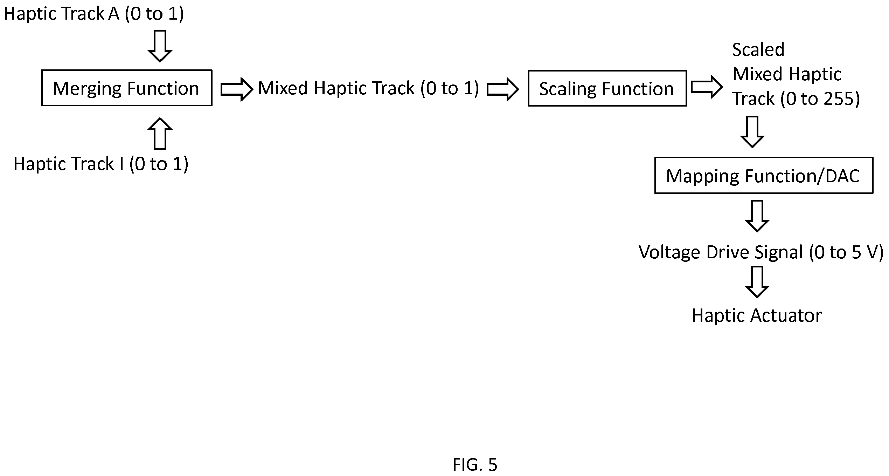

FIG. 5 illustrates an embodiment in which two haptic tracks, such as Haptic Track A and Haptic Track I are combined by the merging function without being scaled beforehand. In one example, the merging function may have an implementation that outputs a sum of Haptic Track A and Haptic Track I minus a product (e.g., a dot product) of Haptic Track A and Haptic Track I. The mixed haptic track may have track values that are in, e.g., the first defined range of 0 to 1, and may then be scaled to a scaled mixed haptic track, which may have track values that are in the operational input range of the haptic actuator (e.g., 0 to 255).

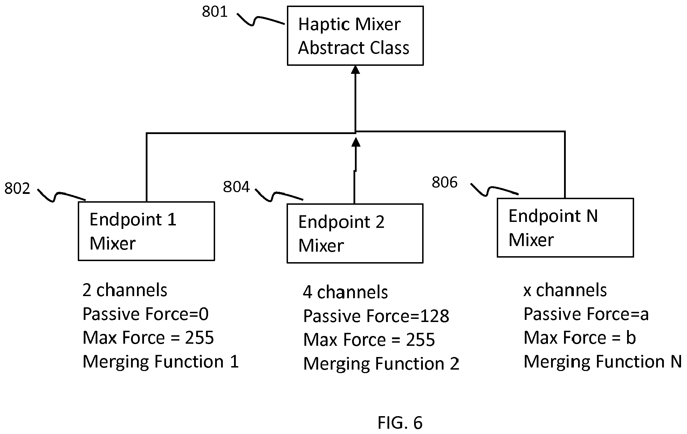

As stated above, some embodiments herein may use a common mixing algorithm that is common to different controller types or to different haptic actuators thereof. In another embodiment, as illustrated in FIG. 6, a haptic generation component (e.g., 152) may use different endpoint mixing functions (also referred to as endpoint mixers) that implement different respective mixing algorithms. For instance, FIG. 6 illustrates a haptic mixer abstract class 801 that has limited functionality. The mixer abstract class 801 may be used as a parent class for various child classes that inherit the mixer abstract class 801. For instance, additional endpoint mixer classes, such as endpoint mixer classes 802, 804, 806 may be created for each haptic effect endpoint supported by the application 150. Each endpoint mixer class may define a mixer algorithm (e.g., scaling and/or merging function) that is specific to that endpoint. For instance, the endpoint mixer class 802 may use a merging function that calculates a weighted sum of at least two haptic tracks, while endpoint mixer class 804 may use a merging function that multiplies track values at least two haptic tracks.

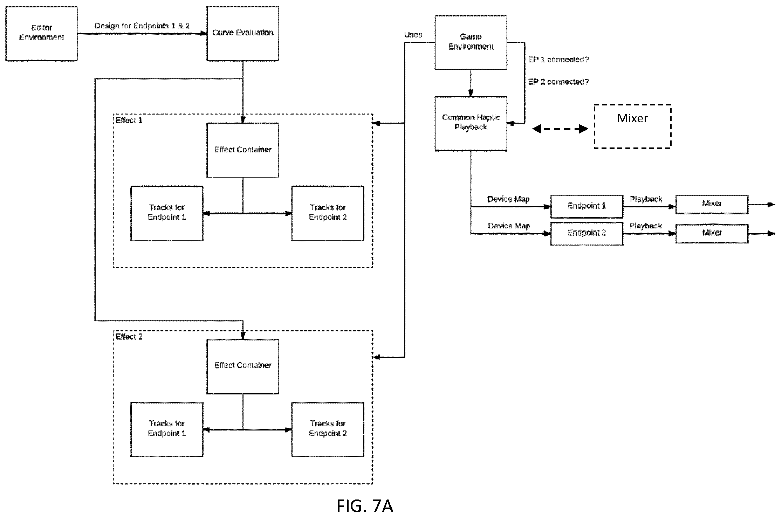

FIG. 7A illustrates a system that also includes an editor environment and a game environment. The editor environment may provide a game editor user interface (UI) that provides a curve evaluation functionality. The curve functionality may refer to part of a functionality that allows a game designer to design and evaluate how various curves (also referred to as waveforms) will act as haptic tracks. As illustrated in FIG. 7A, the editor environment allows a game designer to design haptic tracks that are specific to a particular haptic effect, and specific to a particular endpoint. Like in FIG. 1D, FIG. 7A illustrates haptic tracks that have been designed for a first haptic effect (Effect 1) being stored in a first haptic effect container, and illustrates haptic tracks that have been designed for a second haptic effect (Effect 2) being stored in a second haptic effect container. Each of the first haptic effect container and the second haptic effect container may be an Effect Container file. More specifically, the Effect Container file for Effect 1 includes a haptic track for endpoint 1 as well as a haptic track for endpoint 2. Similarly, the Effect Container file for Effect 2 includes a haptic track for endpoint 1 as well as a haptic track for endpoint 2. In an embodiment, the Effect Container files may be part of the data and code/instructions that are part of a game.

In an embodiment, the game editor environment that may be executed on the game editing computer 100 of FIG. 1E. In an embodiment, the game editor environment may be installed with the haptic effect design plugin 140, which may provide a user interface (UI) and API to design haptic effects. This UI may, for instance, allow a designer to design haptic tracks for various haptic effects. The UI may also allow the designer to place code/instructions and data into the haptic generation component. The code/instructions may include, e.g., code/instructions specific to a particular endpoint, code/instructions for performing mixing, or any other code/instructions. After the code/instructions and data are placed into the haptic generation component 152, they may be compiled with the rest of the game program 150.

In an embodiment, after a game has been designed with the editor environment, it may be compiled into an executable file and installed on another computer (e.g., a game console). When the executable file is executed, it may provide a runtime environment that is a game environment. FIG. 7A illustrates the game environment using a mixer function (also referred to as a mixer algorithm) to generate a mixed haptic effect. For instance, the haptic effect may be generated when both the first haptic effect (Effect 1) and the second haptic effect (Effect 2) is triggered. When both haptic effects are triggered, the game environment may determine which endpoint is associated with the haptic actuator that is going to output the mixed haptic effect. More specifically, this determination may involve determining the controller type of a game controller that is currently being used by a user to provide user input to the game, as well as determining which haptic actuator of the controller type is to generate a haptic effect. The game controller may represent the controller type and the haptic actuator as an endpoint, and may interact with the endpoint by communicating commands and data for controlling the haptic effect. The endpoint may act as an intermediary that can in turn communicate with the haptic actuator of the game controller to control the generating of the haptic effect by the haptic actuator. If the game application is a multi-user game application, the game application may also determine which user(s) is to experience the mixed haptic effect, and whether that user is using a game controller associated with Endpoint 1 or whether the user is using a game controller associated with Endpoint 2.

In an embodiment, after the game application has determined which endpoint is associated with the haptic actuator that is to output the mixed haptic effect, it may retrieve the haptic track associated with that endpoint for the first haptic effect, and the haptic track associated with that endpoint for the second haptic effect. The game environment may then request that a Common Haptic Playback functionality, which may provide a haptic generating API, to mix the haptic track for the first haptic effect with the haptic track for the second haptic effect. Like in FIG. 6, FIG. 7A illustrates an embodiment in which a first mixer function can be used to mix haptic tracks for a first endpoint (Endpoint 1), and a second mixer function can be used to mix haptic tracks for a second endpoint (Endpoint 2). The first mixer function may be different from the second mixer function, such that each of the mixer functions may be an endpoint-specific mixer function.

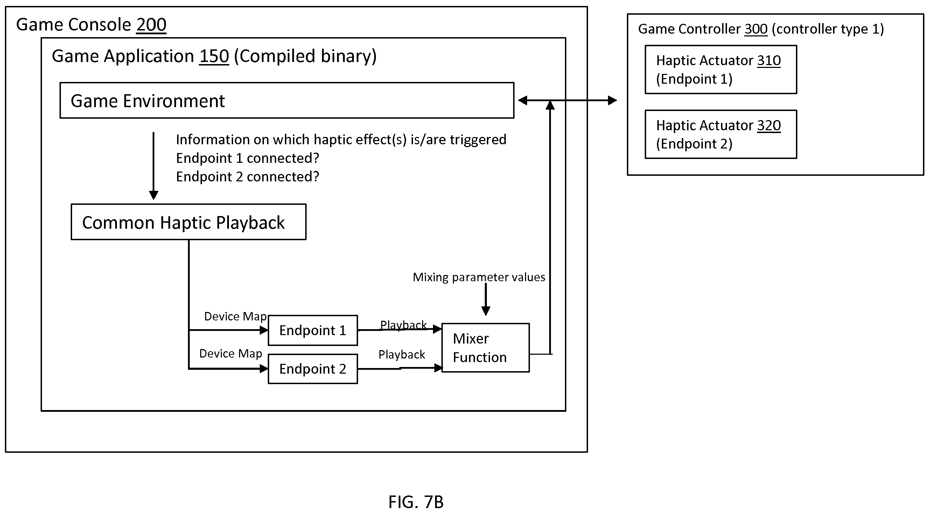

FIG. 7B illustrates another embodiment in which a common mixer function (also referred to as a common mixer algorithm) may be used. More specifically, FIG. 7B illustrates the game console 200 executing the game application 150 (which may be a compiled binary or other executable format) while being controlled by game controller 300 (which belongs to controller type 1). In an embodiment, the game application may determine which haptic effect(s) is to be generated, and provide an indication of that determination to a common haptic playback function, which may act as a function that manages all haptics-related functionality. In one example, the game application 150 may determine that a haptic effect is to be generated by the second haptic actuator of controller type 1, which corresponds to Endpoint 2. In an embodiment, the game application 150 may further provide information to the common haptic playback function as to which endpoint is associated with the haptic actuator that is to generate the haptic effect (e.g., endpoint 2). The game application may then retrieve the relevant haptic tracks associated with the relevant haptic effects for that endpoint (e.g., endpoint 2), and then mix the retrieved haptic effects using a common mixer function, as described above. The common mixer function may be common to multiple endpoints. Further, the common mixer function may perform the mixing of haptic tracks using one or mixing parameter values, as described above. The one or more parameter values may be endpoint-specific, and thus may be used to control the common mixer function so that the mixing is performed in an endpoint-specific manner. After the common mixer function generates a mixed haptic track, the game application 150 may communicate the mixed haptic track to the haptic actuator (e.g., 320) corresponding with the endpoint (e.g., endpoint 2).

### Additional Discussion of Various Embodiments

Embodiment 1 of the present disclosure includes a non-transitory computer-readable medium having instructions stored thereon that, when executed by one or more processors, causes the one or more processors to perform the following: execute an application; determine a controller type of a haptic-enabled controller that is providing user input to the application, wherein any haptic-enabled controller of the controller type (i.e., any haptic-enabled controller belonging to the controller type) has one or more haptic actuators; determine that a mixed haptic effect combining a first haptic effect and a second haptic effect is to be generated by a haptic actuator of the one or more haptic actuators; select, from among a first plurality of haptic tracks that are associated with the first haptic effect in the non-transitory computer-readable medium, a first haptic track that is associated with the first haptic effect and associated with a combination of the controller type and the haptic actuator that is to generate the mixed haptic effect; select, from among a second plurality of haptic tracks that are associated with the second haptic effect in the non-transitory computer-readable medium, a second haptic track that is associated with the second haptic effect and associated with the combination of the controller type and the haptic actuator; select, from among a plurality of parameter values for an operation parameter describing haptic actuator operation, a parameter value that is associated with the combination of the controller type and the haptic actuator; generate, based on the parameter value, a mixed haptic track that combines the first haptic track and the second haptic track; and control the haptic actuator to generate the mixed haptic effect by communicating the mixed haptic track to the haptic-enabled controller.
Embodiment 2 includes the non-transitory computer-readable medium of embodiment 1. Further, the application is a game application, and wherein the haptic-enabled controller is a handheld game controller.
Embodiment 3 includes the non-transitory computer-readable medium of embodiment 1 or 2, wherein the combination of the controller type and the haptic actuator is represented as a haptic effect endpoint in the non-transitory computer readable medium, wherein the haptic effect endpoint is one of a plurality of haptic effect endpoints supported by the application, each of the haptic effect endpoints being a different respective combination of actuator type and haptic actuator, wherein the plurality of parameter values of the operation parameter are associated with the plurality of haptic effect endpoints, respectively, in the non-transitory computer-readable medium, wherein the first plurality of haptic tracks are associated with the plurality of haptic effect endpoints, respectively, in the non-transitory computer-readable medium, wherein the second plurality of haptic tracks are also associated with the plurality of haptic effect endpoints, respectively, in the non-transitory computer-readable medium, and wherein the instructions cause the one or more processors to perform the generating of the mixed haptic track by using a common function that is used to combine haptic tracks for each of the plurality of haptic effect endpoints.
Embodiment 4 includes the non-transitory computer-readable medium of any one of embodiments 1-3, wherein the instructions cause the one or more processors to determine that the mixed haptic effect is to be generated in response to an overlapping occurrence of a first event that is associated with the first haptic effect in the non-transitory computer-readable medium and of a second event that is associated with the second haptic effect in the non-transitory computer-readable medium.
Embodiment 5 includes the non-transitory computer-readable medium of any one of embodiments 1-4, wherein the operation parameter describes how the haptic actuator responds to one or more haptic track values.
Embodiment 6 includes the non-transitory computer-readable medium of embodiment 5, wherein the operation parameter is a max force parameter, wherein the parameter value of the max force parameter is a haptic track value that causes the haptic actuator to generate at least one of a defined rated maximum force or a defined rated maximum actuation of the haptic actuator.
Embodiment 7 includes the non-transitory computer-readable medium of embodiment 6, wherein the instructions cause the one or more processors to perform the generating of the mixed haptic track by: scaling each of the first haptic track and the second haptic track based on the parameter value of the max force parameter to generate a scaled first haptic track and a scaled second haptic track, and by mixing the scaled first haptic track and the scaled second haptic track into the mixed haptic track.
Embodiment 8 includes the non-transitory computer-readable medium of embodiment 6 or 7, wherein the parameter value of the max force parameter is a maximum value of an operational input range of the haptic actuator, wherein the operational input range is a range of haptic track values that are valid input values to the haptic actuator, wherein the first haptic track has haptic track values that are in a first defined range that is different than the operational input range, and wherein the scaling of the first haptic track is performed by mapping a maximum value of the first defined range to the maximum value of the operational input range of the haptic actuator.
Embodiment 9 includes the non-transitory computer-readable medium of embodiment 8, wherein the operation parameter is one of a plurality of operation parameters on which the generating of the mixed haptic track is based, wherein the plurality of operation parameters further include a passive force parameter, wherein a parameter value of the passive force parameter is a haptic track value that causes the haptic actuator to generate at least one of zero force or zero actuation, and wherein the scaling of the first haptic track is performed by mapping a zero value of the first defined range to the parameter value of the passive force parameter.
Embodiment 10 includes the non-transitory computer-readable medium of embodiment 9, wherein the parameter value of the passive force parameter is substantially equal to half of the parameter value of the max force parameter.
Embodiment 11 includes the non-transitory computer-readable medium of embodiment 9 or 10, wherein a minimum value of the first defined range is less than zero, and wherein the scaling of the first haptic track is performed by mapping the minimum value of the first defined range to a zero value of the operational input range of the haptic actuator.
Embodiment 12 includes the non-transitory computer-readable medium of any one of embodiments 9-11, wherein the first haptic track comprise a plurality of track samples having a plurality of respective track values, wherein the scaling of the first haptic track comprises multiplying each of the plurality of respective track values by a ratio to generate a plurality of multiplied values, and adding the parameter value of the passive force parameter to each of the multiplied values, wherein the ratio is equal to a difference between the parameter value of the max force parameter and the parameter value of the passive force parameter, then divided by a size of the first defined range.
Embodiment 13 includes a method performing the functionality of any of the above embodiments.
Embodiment 14 includes a system comprising a computing device and a haptic-enabled controller as described above in any of the above embodiments, wherein the computing device comprises one or more processors that are configured to perform the functionality of any of the above embodiments.
Embodiment 15 is a method executed by one or more processors for generating a mixed haptic effect. This method comprises: executing an application; determining a controller type of a haptic-enabled controller that is providing user input to the application, wherein any haptic-enabled controller of the controller type has one or more haptic actuators; determining that a mixed haptic effect combining a first haptic effect and a second haptic effect is to be generated by a haptic actuator of the one or more haptic actuators; selecting, from among a first plurality of haptic tracks that are associated with the first haptic effect in a non-transitory computer-readable medium, a first haptic track that is associated with the first haptic effect and associated with a combination of the controller type and the haptic actuator that is to generate the mixed haptic effect; selecting, from among a second plurality of haptic tracks that are associated with the second haptic effect in the non-transitory computer-readable medium, a second haptic track that is associated with the second haptic effect and associated with the combination of the controller type and the haptic actuator; selecting, from among a plurality of parameter values for an operation parameter describing haptic actuator operation, a parameter value that is associated with the combination of the controller type and the haptic actuator; generating, based on the parameter value, a mixed haptic track that combines the first haptic track and the second haptic track; and controlling the haptic actuator to generate the mixed haptic effect by communicating the mixed haptic track to the haptic-enabled controller.
Embodiment 16 is the method of embodiment 15, wherein the application is a game application, and wherein the haptic-enabled controller is a handheld game controller.
Embodiment 17 is the method of embodiment 16, wherein the combination of the controller type and the haptic actuator is represented as a haptic effect endpoint in the non-transitory computer readable medium, wherein the haptic effect endpoint is one of a plurality of haptic effect endpoints supported by the application, each of the haptic effect endpoints being a different respective combination of actuator type and haptic actuator, wherein the plurality of parameter values of the operation parameter are associated with the plurality of haptic effect endpoints, respectively, in the non-transitory computer-readable medium, wherein the first plurality of haptic tracks are associated with the plurality of haptic effect endpoints, respectively, in the non-transitory computer-readable medium, wherein the second plurality of haptic tracks are also associated with the plurality of haptic effect endpoints, respectively, in the non-transitory computer-readable medium, and wherein the generating of the mixed haptic track is based on a common function that is used to combine haptic tracks for each of the plurality of haptic effect endpoints.
Embodiment 18 is the method of any one of embodiments 15 to 17, wherein the instructions cause the one or more processors to determine that the mixed haptic effect is to be generated in response to an overlapping occurrence of a first event that is associated with the first haptic effect in the non-transitory computer-readable medium and of a second event that is associated with the second haptic effect in the non-transitory computer-readable medium.
Embodiment 19 is the method of any one of embodiments 15 to 18, wherein the operation parameter is a max force parameter, wherein the parameter value of the max force parameter is a haptic track value that causes the haptic actuator to generate at least one of a defined rated maximum force or a defined rated maximum actuation of the haptic actuator.
Embodiment 20 is the method of embodiment 19, wherein the generating of the mixed haptic track is performed by: scaling each of the first haptic track and the second haptic track based on the parameter value of the max force parameter to generate a scaled first haptic track and a scaled second haptic track, and by mixing the scaled first haptic track and the scaled second haptic track into the mixed haptic track.
Embodiment 21 is the method of embodiment 20, wherein the parameter value of the max force parameter is a maximum value of an operational input range of the haptic actuator, wherein the operational input range is a range of haptic track values that are valid input values to the haptic actuator, wherein the first haptic track has haptic track values that are in a first defined range that is different than the operational input range, and wherein the scaling of the first haptic track is performed by mapping a maximum value of the first defined range to the maximum value of the operational input range of the haptic actuator, wherein the operation parameter is one of a plurality of operation parameters on which the generating of the mixed haptic track is based, wherein the plurality of operation parameters further include a passive force parameter, wherein a parameter value of the passive force parameter is a haptic track value that causes the haptic actuator to generate at least one of zero force or zero actuation, and wherein the scaling of the first haptic track is performed by mapping a zero value of the first defined range to the parameter value of the passive force parameter.

While various embodiments have been described above, it should be understood that they have been presented only as illustrations and examples of the present invention, and not by way of limitation. Further, some examples herein recite mixing haptic tracks for a game controller and game application, the mixing of haptic tracks of the embodiments herein apply more generally to any software application and any type of user input device. It will be apparent to persons skilled in the relevant art that various changes in form and detail can be made therein without departing from the spirit and scope of the invention. Thus, the breadth and scope of the present invention should not be limited by any of the above-described exemplary embodiments, but should be defined only in accordance with the appended claims and their equivalents. It will also be understood that each feature of each embodiment discussed herein, and of each reference cited herein, can be used in combination with the features of any other embodiment. All patents and publications discussed herein are incorporated by reference herein in their entirety.

## Claims

1. A non-transitory computer-readable medium having instructions stored thereon that, when executed by one or more processors, causes the one or more processors
to execute an application;
to determine a controller type of a haptic-enabled controller that is providing user input to the application, wherein any haptic-enabled controller of the controller type has one or more haptic actuators;
to determine that a mixed haptic effect combining a first haptic effect and a second haptic effect is to be generated by a haptic actuator of the one or more haptic actuators;
to select, from among a first plurality of haptic tracks that are associated with the first haptic effect in the non-transitory computer-readable medium, a first haptic track that is associated with the first haptic effect and associated with a combination of the controller type and the haptic actuator that is to generate the mixed haptic effect;
to select, from among a second plurality of haptic tracks that are associated with the second haptic effect in the non-transitory computer-readable medium, a second haptic track that is associated with the second haptic effect and associated with the combination of the controller type and the haptic actuator;
to select, from among a plurality of parameter values for an operation parameter describing haptic actuator operation, a parameter value that is associated with the combination of the controller type and the haptic actuator;
to generate, based on the parameter value, a mixed haptic track that combines the first haptic track and the second haptic track;
to control the haptic actuator to generate the mixed haptic effect by communicating the mixed haptic track to the haptic-enabled controller.

2. The non-transitory computer-readable medium of claim 1, wherein the application is a game application, and wherein the haptic-enabled controller is a handheld game controller.

3. The non-transitory computer-readable medium of claim 1 or 2, wherein the combination of the controller type and the haptic actuator is represented as a haptic effect endpoint in the non-transitory computer readable medium, wherein the haptic effect endpoint is one of a plurality of haptic effect endpoints supported by the application, each of the haptic effect endpoints being a different respective combination of actuator type and haptic actuator,
wherein the plurality of parameter values of the operation parameter are associated with the plurality of haptic effect endpoints, respectively, in the non-transitory computer-readable medium,
wherein the first plurality of haptic tracks are associated with the plurality of haptic effect endpoints, respectively, in the non-transitory computer-readable medium,
wherein the second plurality of haptic tracks are also associated with the plurality of haptic effect endpoints, respectively, in the non-transitory computer-readable medium, and
wherein the instructions cause the one or more processors to perform the generating of the mixed haptic track by using a common function that is used to combine haptic tracks for each of the plurality of haptic effect endpoints.

4. The non-transitory computer-readable medium of any one of claims 1-3, wherein the instructions cause the one or more processors to determine that the mixed haptic effect is to be generated in response to an overlapping occurrence of a first event that is associated with the first haptic effect in the non-transitory computer-readable medium and of a second event that is associated with the second haptic effect in the non-transitory computer-readable medium.

5. The non-transitory computer-readable medium of any one of claims 1-4, wherein the operation parameter describes how the haptic actuator responds to one or more haptic track values.

6. The non-transitory computer-readable medium of claim 5, wherein the operation parameter is a max force parameter, wherein the parameter value of the max force parameter is a haptic track value that causes the haptic actuator to generate at least one of a defined rated maximum force or a defined rated maximum actuation of the haptic actuator.

7. The non-transitory computer-readable medium of claim 6, wherein the instructions cause the one or more processors to perform the generating of the mixed haptic track by: scaling each of the first haptic track and the second haptic track based on the parameter value of the max force parameter to generate a scaled first haptic track and a scaled second haptic track, and by mixing the scaled first haptic track and the scaled second haptic track into the mixed haptic track.

8. The non-transitory computer-readable medium of claim 6 or 7, wherein the parameter value of the max force parameter is a maximum value of an operational input range of the haptic actuator, wherein the operational input range is a range of haptic track values that are valid input values to the haptic actuator,
wherein the first haptic track has haptic track values that are in a first defined range that is different than the operational input range, and
wherein the scaling of the first haptic track is performed by mapping a maximum value of the first defined range to the maximum value of the operational input range of the haptic actuator.

9. The non-transitory computer-readable medium of claim 8, wherein the operation parameter is one of a plurality of operation parameters on which the generating of the mixed haptic track is based, wherein the plurality of operation parameters further include a passive force parameter, wherein a parameter value of the passive force parameter is a haptic track value that causes the haptic actuator to generate at least one of zero force or zero actuation, and
wherein the scaling of the first haptic track is performed by mapping a zero value of the first defined range to the parameter value of the passive force parameter.

10. The non-transitory computer-readable medium of clam 9, wherein the parameter value of the passive force parameter is substantially equal to half of the parameter value of the max force parameter.

11. The non-transitory computer-readable medium of claim 9 or 10, wherein a minimum value of the first defined range is less than zero, and wherein the scaling of the first haptic track is performed by mapping the minimum value of the first defined range to a zero value of the operational input range of the haptic actuator.

12. The non-transitory computer-readable medium of any one of claims 9-11, wherein the first haptic track comprise a plurality of track samples having a plurality of respective track values, wherein the scaling of the first haptic track comprises multiplying each of the plurality of respective track values by a ratio to generate a plurality of multiplied values, and adding the parameter value of the passive force parameter to each of the multiplied values, wherein the ratio is equal to a difference between the parameter value of the max force parameter and the parameter value of the passive force parameter, then divided by a size of the first defined range.

13. A method executed by one or more processors for generating a mixed haptic effect, the method comprising:
executing an application;
determining a controller type of a haptic-enabled controller that is providing user input to the application, wherein any haptic-enabled controller of the controller type has one or more haptic actuators;
determining that a mixed haptic effect combining a first haptic effect and a second haptic effect is to be generated by a haptic actuator of the one or more haptic actuators;
selecting, from among a first plurality of haptic tracks that are associated with the first haptic effect in a non-transitory computer-readable medium, a first haptic track that is associated with the first haptic effect and associated with a combination of the controller type and the haptic actuator that is to generate the mixed haptic effect;
selecting, from among a second plurality of haptic tracks that are associated with the second haptic effect in the non-transitory computer-readable medium, a second haptic track that is associated with the second haptic effect and associated with the combination of the controller type and the haptic actuator;
selecting, from among a plurality of parameter values for an operation parameter describing haptic actuator operation, a parameter value that is associated with the combination of the controller type and the haptic actuator;
generating, based on the parameter value, a mixed haptic track that combines the first haptic track and the second haptic track;
controlling the haptic actuator to generate the mixed haptic effect by communicating the mixed haptic track to the haptic-enabled controller.

14. A system for generating mixed haptic effects, the system comprising:
a computing device having one or more processors configured to execute an application;
a haptic-enabled controller configured to communicate with the computing device and to provide user input to the application, wherein the haptic-enabled controller further includes one or more haptic actuators,
wherein the one or more processors of the computing device are further configured
to determine a controller type of the haptic-enabled controller;
to determine that a mixed haptic effect combining a first haptic effect and a second haptic effect is to be generated by a haptic actuator of the one or more haptic actuators;
to select, from among a first plurality of haptic tracks that are associated with the first haptic effect in the non-transitory computer-readable medium, a first haptic track that is associated with the first haptic effect and associated with a combination of the controller type and the haptic actuator that is to generate the mixed haptic effect;
to select, from among a second plurality of haptic tracks that are associated with the second haptic effect in the non-transitory computer-readable medium, a second haptic track that is associated with the second haptic effect and associated with the combination of the controller type and the haptic actuator;
to select, from among a plurality of parameter values for an operation parameter describing haptic actuator operation, a parameter value that is associated with the combination of the controller type and the haptic actuator;
to generate, based on the parameter value, a mixed haptic track that combines the first haptic track and the second haptic track;
to control the haptic actuator to generate the mixed haptic effect by communicating the mixed haptic track to the haptic-enabled controller.
